# EUROPÄISCHE PATENTANMELDUNG

(11) **EP 2 141 135 A1**
(43) Veröffentlichungstag der Anmeldung: **06.01.2010**
(21) Anmeldenummer: 09008569.7
(22) Anmeldetag: 30.06.2009
(51) Int. Cl.: C03C 17/34

(54) **Vorrichtung zur Reflektion von Wärmestrahlung, ein Verfahren zu ihrer Herstellung sowie deren Verwendung**

(30) Priorität: 30.06.2008 DE 102008030825
(71) Anmelder: Schott AG, 55122 Mainz (DE)
(72) Erfinder: Henn, Christian, 55546 Frei-Laubersheim (DE); Schmidbauer, Wolfgang, Dr., 55126 Mainz (DE); Gabelmann, Torsten, 65199 Wiesbaden (DE)
(74) Vertreter: Fritzsche, Thomas

(57) **Zusammenfassung**

Eine Wärmestrahlung reflektierende Vorrichtung mit hoher thermischer Dauerbeständigkeit, z.B. 100 Stunden bei 500°C, umfasst ein Substrat, das auf wenigstens einer Seite eine Wärmestrahlung reflektierende Schicht (A) aufweist, die Indium-Zinn-Oxid enthält, wobei die Schicht (A) von einer Barriereschicht (B) überdeckt wird, die wenigstens ein Metalloxid und/oder wenigstens ein Metallnitrid enthält. Eine solche Vorrichtung ist zur Verwendung in einem Kamin oder Backofen geeignet.

## Beschreibung

Die Erfindung betrifft eine Wärmestrahlung reflektierende Vorrichtung umfassend ein insbesonders transparentes Substrat wie Glas oder Glaskeramik, das auf wenigstens einer Seite eine wärmereflektierende Metalloxidschicht und ggf. weitere Metalloxidschichten aufweisen, ein Verfahren zu deren Herstellung und deren Verwendung.

Viele Materialien, und zwar sowohl lichtundurchlässige als auch transparente Substrate, wie z. B. Glas, lassen sich durch das Aufbringen von Schichten auf ihre Oberfläche mit neuen Eigenschaften versehen. So sind z. B. Beschichtungen bekannt, die für sichtbares Licht durchlässig, jedoch für andere Lichtquellen, wie z. B. Licht im infraroten Spektrum oder auch im UV-Bereich nur beschränkt durchlässig sind. Derart beschichtete Bauteile bzw. Vorrichtungen werden für Bauglas, Industrieanlagen, Kamine, Backöfen oder auch Fahrzeugfenster verwendet.

So werden z.B. holzbefeuerte Kaminöfen für den privaten Gebrauch bisher mit sogenannten Robax^{®}-Kaminsichtscheiben (der Fa. Schott AG, Deutschland) ausgestattet. Diese Öfen besitzen zurzeit eine hohe Wärmeleistung, wobei ein erheblicher Teil der Wärme über die Kaminsichtscheibe abgegeben wird. Dies ist beim Anfeuern des Ofens erwünscht, da zu Beginn des Heizens möglichst viel Wärme in den Raum abgegeben werden soll, damit sich dieser möglichst schnell erwärmt.

Andererseits wird viel Wärme dadurch erzeugt, dass das Feuer möglichst rasch eine geregelte Verbrennung erreicht, d.h. das Brenngut muss bei einer möglichst hohen Temperatur verbrannt werden. Hat der Kaminofen die gewünschte Verbrennungsleistung erreicht, wird aber auch ein Großteil der Wärme über die Kaminofensichtscheibe abgegeben und der Kamin umgebende Bereich, also der Boden und Gegenstände in der Nähe des Ofens, signifikant erhitzt. Befinden sich nun Holzböden oder anderes hochwertiges Mobiliar in der Nähe der Kaminsichtscheibe, so kann es in Abhängigkeit der Holzart zu mehr oder weniger starken Alterungsprozessen kommen.

An der Kaminsichtscheibe herrschen in der Regel Temperaturen von deutlich mehr als 250°C. Die Kaminsichtscheibe stellt somit auch eine Gefahrenquelle insbesonders für spielende Kinder dar.

Bei der Verbrennung im Kaminofen werden je nach Verbrennungszustand Stickoxide, Kohlenmonoxid und/oder Kohlendioxid sowie Ruß und Feinstaub produziert. Diese Produkte werden sowohl zu Beginn der Verbrennung als auch beim Erreichen der Nennwärme produziert.

Darüber hinaus werden die modernen Kaminöfen häufig auch mit dem zentralen Heizungssystem gekoppelt, wobei die überschüssige Wärme über Rauchgase abgeführt und deren Wärme nochmals genutzt werden kann. Somit kann überschüssige Energie, die ansonsten im Ofen verbliebe und/oder an die Umgebung abgegeben würde, zusätzlich genutzt werden.

Aus der US 2005/0064205 A1 ist ein Glasartikel, der ein transparentes wärmebeständiges Flächeglas umfasst, welches mit einer mehr oder weniger lichtundurchlässigen Schicht versehen ist. Dabei zeigt die durchschnittliche Durchlässigkeit von sichtbarem Licht bei Wellenlängen zwischen 380 und 370 nm 0,03 bis 15% und die durchschnittliche Reflexion im infraroten Bereich bei Wellenlängen von 1000 bis 2500 nm mindestens 50%. Darin wird als infrarotreflektierende Schicht auch ein zinndotiertes Indiumoxid beschrieben.

In der WO 03/093185 wird ein beschichtetes Glas beschrieben, welches insbesonders für Photovoltaikzellen geeignet ist. Dieses Glas weist eine leitende Schicht als Elektrode auf, die mindestens mit einem oder mehreren Elementen dotierte Indiumoxidschicht umfasst. Diese Schicht selbst kann mittels einer Schutzschicht aus feinem Metall oder Metallnitrid überzogenen sein. Auch die Verwendung solcher Elektroden als Wärmeisolationsbeschichtung ist darin erwähnt.

Eine Aufgabe der vorliegenden Erfindung ist es daher, eine Vorrichtung zur Verfügung zu stellen, die es erlaubt, im infraroten Teil des Spektrums soviel Strahlung wie möglich zu reflektieren, während im Wesentlichen die vollständige Transparenz im sichtbaren Teil des Spektrums erhalten bleiben soll. Weiterhin soll die Vorrichtung bei hohen Einsatztemperaturen, insbesonders bei Einsatztemperaturen bis 500°C, thermisch beständig bleiben.

Darüber hinaus soll die Vorrichtung die Temperatur vor und an der Kaminsichtscheibe in dem Maße verringern, dass Gegenstände vor dem Kaminofen keine Alterung durch das Einwirken von Wärme aus dem Kaminofen erleiden. Insbesonders soll eine Vorrichtung zur Verfügung gestellt werden, die dafür sorgt, dass die Wärme im Kaminofen verbleibt, so dass sie auch beim Betrieb des Kaminofens von außen zumindest kurzzeitig berührt werden kann, ohne sich dabei schwerwiegend zu verbrennen.

Eine weitere Aufgabe der Erfindung ist es, eine Vorrichtung zur Verfügung zu stellen, die es erlaubt, die Verbrennung in Kaminöfen im Anfeuerzustand durch höhere Verbrennungstemperaturen in kurzer Zeit zu fördern und auch die Temperatur während der gesamten Feuerung zu erhöhen. Auf diese Weise soll sowohl die Bildung von Ruß- und Feinstaub, als auch die Bildung von Stickoxiden verringert werden. Darüber hinaus kann auf diese Weise zusätzliche Wärme erhalten werden, die über Rauchgase abgeführt und nochmals genutzt werden kann.

Die vorstehend genannten Aufgaben werden durch die in den Ansprüchen definierten Merkmale gelöst. Erfindungsgemäß wurde nämlich gefunden, dass eine dünne Metalloxidschicht, welche Indium-Zinn-Oxid (ITO) enthält, besonders gut infrarotes Licht reflektiert. Diese Schicht wird im Folgenden als Schicht A bezeichnet. Dabei kann die wärmereflektierende Schicht zwar neben Indium-Zinn-Oxid auch andere aus dem Stand der Technik bekannte Bestandteile enthalten, jedoch weist sie vorzugsweise mindestens 30 Gew.-% an Indium-Zinn-Oxid auf vorzugsweise mindestens 50, insbesonders mindestens 70%, wobei diese in einer bevorzugten Ausführungsform mindestens 80% ITO aufweist. In einer typischen Ausführungsform besteht diese im Wesentlichen vollständig aus Indium-Zinn-Oxid, von gegebenenfalls vorliegenden Verunreinigungen abgesehen.

Die erfindungsgemäße wärmereflektierende Vorrichtung umfasst daher ein Basissubstrat, welches vorzugsweise flächenförmig ausgestaltet ist, das auf wenigstens einer Seite eine wärmereflektierende Schicht aufweist, die Indium-Zinn-Oxid (ITO) enthält bzw. daraus besteht. Über der wärmereflektierenden Schicht ist eine Barriereschicht angeordnet, welche die ITO-Schicht bedeckt. Die Barriereschicht enthält insbesonders ein Metalloxid und/oder ein Metallnitrid.
Dadurch ergibt sich eine Schichtfolge Substrat/ITO-Schicht (A)/Barriereschicht (B).

Die Barriereschicht (B) ermöglicht es die thermische Dauerbeständigkeit noch weiter zu verbessern. Insbesonders ermöglicht die Barriereschicht (B) den Betrieb des Kaminofens bei einer Temperatur zwischen 450°C und 550°C, bevorzugt bei einer Temperatur von 500°C für eine Dauer von mehr als 80, insbesonders mehr als 100 Stunden, wobei mehr als 130 Stunden besonders bevorzugt ist.

Bevorzugte Oxide bzw. Nitride sind Siliziumdioxid (SiO₂) Siliziumnitrid (Si₃N₄), Aluminiumoxid (Al₂O₃), TiO₂, SiOₓN_{y}, ZrO₂, MoO₂, Nb₂O₅.

Das Siliziumnitrid kann auch eine von der oben angegebenen Stöchiometrie abweichende Zusammensetzung aufweisen und andere Elemente wie z. B. Sauerstoff als Oxid enthalten. Bevorzugt enthält das Siliziumnitrid jedoch weniger als 5 Atom-% Sauerstoff, besonders bevorzugt weniger als 2 Atom-% Sauerstoff, ganz besonders bevorzugt enthält das Siliziumnitrid keinen Sauerstoff.

Bevorzugt weist die Barriereschicht (B) eine Dicke im Bereich von mindestens 50 nm, üblicherweise mindestens 100 nm auf, wobei eine bevorzugte maximale Dicke 400 nm beträgt. Besonders bevorzugt ist eine Dicke im Bereich von 300 nm bis 400 nm. Vorzugsweise besteht die Barriereschicht (B) aus Siliziumdioxid.

Die erfindungsgemäß angeordnete Barriereschicht weist im AAS-Test eine hohe Barriereeigenschaft auf.

Dazu wird die Auslaugung der Schicht mittels 0,1 m HCL über einen Zeitraum von 1 Stunde bei 98°C ausgelaugt und der Restanteil an Na₂O bestimmt. Dieser liegt in den erfindungsgemäßen Schichten unter 1µg/dm², was beispielsweise mit AAS (Atomabsorptionsspektroskopie) nachgewiesen wird.

Die ITO-Schicht (A) und die Barriereschicht (B) wirken zusammen als Reflektor bzw. Interferenzsystem. Durch dieses Interferenzsystem kann die Plasmakante zusätzlich zu weiteren niedrigeren Wellenlängen verschoben werden. Vorzugsweise liegt die Plasmakante in diesem Fall in einem Bereich zwischen 1200 und 1300 nm. Die Dicke der Barriereschicht (B) wird dabei in Abhängigkeit vom Brechungsindex der Barriereschicht ausgewählt. Durch einen derartigen Interferenzoptischen Effekt wird eine Verschiebung der Plasmakante zu niedrigeren Wellenlängen erreicht, und zwar bei einer Reflexion von 70% um 200 nm, vorzugsweise um 300 nm, wobei um mindestens 400 nm besonders bevorzugt ist.

Selbstverständlich können zusätzlich zu der erfindungsgemäßen wärmereflektierenden Schicht noch weitere wärmereflektierende Schichten oberhalb und unterhalb der ITO-Schicht angeordnet sein. Die Schicht ist auf derjenigen Seite des Substrates angeordnet, die der Wärmequelle zugewandt ist bzw. aus der die zu reflektierende Wärme - bzw. IR-Strahlen auf die Vorrichtung auftreffen. Selbstverständlich kann die Schicht auch auf der wärmeabgewandten Seite vorliegen. In einer besonders zweckmäßigen Form liegen die erfindungsgemäßen Schichten auf beiden Seiten des Substrats vor.

Als flächenförmiges Basissubstrat bzw. Trägermaterial wird vorzugsweise ein transparentes Trägermaterial wie z.B. Glas, Glaskeramiken und/oder andere Keramiken verwendet. Prinzipiell ist es jedoch auch möglich andere nicht lichtdurchlässige bzw. transparente Materialien wie beispielsweise Metalle, Holz oder Kunststoffe mit der erfindungsgemäßen wärmereflektierenden Schicht zu versehen, um das darunterliegende Substrat vor zu starker Erwärmung zu schützen.

Die in der erfindungsgemäßen Vorrichtung enthaltene wärmereflektierende Indium-Zinn-Oxid ITO-Schicht weist vorzugsweise eine Dicke von mindestens 100 nm auf. Bevorzugte Mindestdicken betragen 300 bzw. 450 nm, wobei bevorzugte Maximaldicken 800 bzw. 700 nm betragen. Eine besonders bevorzugte Maximaldicke beträgt 600 nm.

In einer weiteren bevorzugten Ausführungsform beträgt die Elektronendichte Anzahl der Elektronen pro Volumeneinheit der wärmereflektierenden ITO-Schicht mindestens 1,0*10²¹ cm⁻³ bis 1,7*10²¹ cm⁻³, vorzugsweise bis 1,2 x 10⁻¹² cm auf.

Indium-Zinn-Oxid ITO (*indium tin oxide*) ist ein halbleitendes und transparentes Material. Bevorzugt weist das Indium-Zinn-Oxid einen Zinngehalt zwischen 5 und 20 bzw. zwischen 7 und 13%, und besonders bevorzugt zwischen 8 und 12%, ganz besonders bevorzugt zwischen 9 und 11% auf, jeweils bezogen auf die Gesamtmenge an Zinn und Indium (100 Gew.-%). Ein häufig verwendeter Zinngehalt beträgt etwa 10%.

Die ITO-Schicht ist transparent und leitfähig. Allerdings darf nicht übersehen werden, dass sich die Eigenschaften Transparenz und Leitfähigkeit gegenläufig mit der Elektronendichte verändern. Die Leitfähigkeit wächst mit der Elektronendichte, während die optische Transparenz im sichtbaren mit wachsender Elektronendichte abnimmt. Daher ist gemäß der vorliegenden Erfindung die Elektronendichte nie so hoch, dass die Vorrichtung im sichtbaren Bereich ihre optische Transparenz verliert.

Die Elektronen in der ITO-Schicht weisen bevorzugt eine Beweglichkeit von mindestens 25, insbesonders mindestens 40 cm²/Vs auf, wobei mindestens 42 cm²/Vs besonders bevorzugt ist. Eine bevorzugte maximale Beweglichkeit beträgt 50 cm²/Vs, insbesonders maximal 48 cm²/Vs. Eine übliche Beweglichkeit beträgt etwa 45 ± 1 cm²/Vs bei einer Temperatur von 20°C.

Ein charakteristisches Merkmal eines Reflexionsspektrums ist die Plasmakante. Sie liegt bei Festkörpern an derjenigen Stelle des Spektrums, an der die sogenannte Plasmaresonanz auftritt. Die Plasmakante teilt das Reflexionsspektrum effektiv in zwei Bereiche auf, nämlich: Eine langwellige Seite, bei der Strahlung reflektiert wird, und eine kurzwellige Seite, welche für Strahlung mit entsprechend kürzeren Wellenlängen durchlässig ist.

Zweckmäßigerweise weist die ITO-Schicht eine Plasmakante zwischen 1200 und 1800 nm, vorzugsweise zwischen 1200 nm und 1600 nm auf. Da eine Glaskeramik Wellenlängen < 4,5 µm nicht reflektiert und anderseits das Flammenspektrum bei ca. 3,5 µm und das Glutspektrum bereits bei 2,5 µm jeweils ihr Maximum erreichen, ist dafür eine sehr steile und zu niedrigen Wellenlängen verschobene Plasmakante notwendig, um eine möglichst effiziente Wärmereflexion zu erzielen.

Als Infrarotstrahlung bezeichnet man elektromagnetische Wellen im Spektralbereich zwischen sichtbarem Licht und den langwelligeren Mikrowellen. Dies entspricht einer Wellenlänge im Bereich von etwa 780 nm bis 1 mm, wobei für die vorliegende Erfindung ein Bereich zwischen 350 bis 5 µm besonders relevant ist.

Sichtbares Licht weist eine Wellenlänge im Bereich zwischen 380 bis 780 nm auf.

Der Reflexionsgrad (Reflexionsvermögen) gibt das Verhältnis zwischen reflektierter und einfallender Intensität, zum Beispiel reflektierter und einfallender Intensität des Lichtes, wieder.

Der Transmissionsgrad ist definiert als Verhältnis zwischen der Wellenintensität des Lichtes hinter dem Hindernis und der Intensität des Lichtes vor dem Hindernis.

Der Brechungsindex ändert sich mit der Wellenlänge. Gemäß der vorliegenden Erfindung soll der Ausdruck "Brechungsindex" den Brechungsindex für Licht der Wellenlänge 550 nm bedeuten und bei der Bewertung und Angabe von Brechungsindex wird ein imaginärer Anteil des Brechungsindex vernachlässigt.

Bevorzugt weist die Vorrichtung bzw. das Schichtsystem im infraroten Bereich (5 µm) einen Reflexionsgrad von mindestens 0,7, besonders bevorzugt von mindestens 0,8, ganz besonders bevorzugt von mindestens 0,9 auf. Diese Werte werden auch nach einer thermischen Dauerbelastung von mindestens 100 Stunden bei 500°C noch beibehalten. Die IR-Reflexion ist von der Wellenlänge abhängig und beträgt in einer bevorzugten Ausführungsform durch Interferenzeffekte im Bereich 1,6 bis 1,45 µm üblicherweise mindestens 50%, im Bereich 1,8 bis 1,5 µm üblicherweise mindestens 60% und im Bereich von 2,05 bis 1,63 µm üblicherweise mindestens 70%.

Das Schichtsystem gemäß der Erfindung weist auch nach einer thermischen Dauerbelastung von 500°C für mindestens 100 Stunden noch eine Farbveränderung im Lab Farbsystem von dE < 4 auf.

Derartige Reflexionsgrade sind mittels üblichen Spektralphotometer einfach zu bestimmen.

Bevorzugt zeigt die wärmereflektierende Schicht (A) im sichtbaren Bereich einen Transmissionsgrad mindestens 70%, insbesonders mindestens 80%, ganz besonders bevorzugt mindestens 85%. Zweckmäßigerweise werden die Transmissionswerte auch von der Kombination aus wärmereflektierender Schicht (A) plus Barriereschicht (B) erreicht.

Bevorzugt weist die ITO-Schicht (A) einen Flächenwiderstand < 10 Ω/□, besonders bevorzugt < 7 Ω/□ und ganz besonders bevorzugt < 4 Ω/□ auf (wobei □ Square bedeutet). Vorzugsweise liegt der Brechungsindex der ITO-Schicht (A) im Bereich zwischen 1,8 bis 2.

Bevorzugt ist das Substrat der Vorrichtung Glas und/oder Glaskeramik. Geeignete Gläser sind alkalihaltige Floatgläser, wie beispielsweise Borosilikatgläser, (z. B. Borofloat, insbesonders Borofloat 33 bzw. Borofloat 40, Duran von SCHOTT AG, Mainz), genau wie alkalifreie Gläser (z.B. AF37, AF45 von SCHOTT AG, Mainz), Aluminiumsilikatgläser (z.B. FIOLAX, ILLAX von SCHOTT AG, Mainz), Erdalkaligläser (z.B. B270, BK7 von SCHOTT AG, Mainz), Li₂O-Al₂O₃-SiO₂-Floatglas, entfärbtes Floatglas und Kalknatron-Gläser.

Typische Glaskeramiken, die als alkalihaltige Glaskeramiken Verwendung finden, sind beispielsweise Lithium-Alumo-Silikate (LAS-Glaskeramiken, wie Ceran^{®}, Robax^{®} oder Zerodur^{®}, alles Marken von SCHOTT AG, Mainz), aber auch alkalifreie Glaskeramiken, wie Magnesium-Alumo-Silikate (MAS), können eingesetzt werden. Ebenfalls können als Glaskeramik Lithium-Aluminium-Silikat-Glaskeramiken, wie in DE 10 2005 032 786 A1 beschrieben, eingesetzt werden.

Die Vorrichtung ist nicht nur hinsichtlich des Materials sondern auch hinsichtlich der Form im Rahmen der Erfindung nicht begrenzt, so dass beispielsweise flache, runde, abgerundete, große und kleine Formen eingesetzt werden können. Bevorzugt sind flächige Formen aus oder mit Glas und/oder Glaskeramik in Form von Glasscheiben.

Die Erfindung betrifft daher auch eine Vorrichtung, die wärmereflektierende, ITO enthaltende Schicht (A) mit einer Dicke im Bereich von 580 nm bis 630 nm, bevorzugt mit einer Dicke von 600 ± 5 nm und eine Barriereschicht (B), vorzugsweise aus SiO₂, mit einer Dicke im Bereich von 340 bis 360 nm, bevorzugt von 355 ± 4 nm aufweist.

Eine transparente Vorrichtung, die ein Schichtsystem aus ITO-Schicht (A) und Barriereschicht (B) aufweist, zeigt vorzugsweise im sichtbaren Bereich des Lichts einen Transmissionsgrad >85, besonders bevorzugt >90 % bezogen auf die Vorrichtung selbst.

Die Barriereschicht (B) weist vorzugsweise einen Brechungsindex im Bereich von 1,3 bis 1,8, zweckmäßigerweise von 1,4 bis 1,7 auf. Durch die entsprechende Wahl der Brechungsindices für die ITO-Schicht (A) und die Barriereschicht (B) weist dieses Schichtsystem keine Interferenzfärbungen auf. Vorzugsweise zeigt die das vorstehend genannte Schichtsystem enthaltende Vorrichtung unter einfallendem Licht eine Farbänderung im LAB-Farbsystem von höchstens dE = 10, besonders bevorzugt von höchstens dE = 8, ganz besonders bevorzugt von höchstens dE = 4, und zwar auch nach thermischer Bealastung bis 500°C.

In einer weiteren bevorzugten Ausführungsform besteht die Barriereschicht (B) aus mehreren einzelnen Unterschichten, insbesonders aus 3 bis 5 einzelnen Unterschichten, die beispielsweise mittels SEM Aufnahmen durch Interfaces erkennbar sind.

In einer besonders bevorzugten Ausführungsform bewirkt die Barriereschicht (B) einen Schutz vor einer Rissbildungsneigung der ITO-Schicht (A) bzw. des transparenten Substrates. Vorzugsweise beträgt die Dicke der Barriereschicht (B) vorzugsweise zwischen 300 nm bis 400 nm.

Die Barriereschicht (B) wirkt zusätzlich als Schutzschicht für die ITO-Schicht (A) vor chemischer Korrosion, als mechanische Schutzschicht, wie eine kratzfeste Schicht, als Schicht mit optischer Funktion und als eine Schicht, welche die Haftung von gegebenenfalls darüberliegenden Schichten verbessern kann. Die Zusammensetzung derartiger Schichten, z.B. Zink und Magnesium enthaltende LAS-Keramiken, ist der DE 10 2005 032 786 A1 zu entnehmen.

Die Barriereschicht (B) selbst kann zusätzlich mit einer leicht reinigbaren Oberfläche beschichtet bzw. überschichtet werden. In einer weiteren Ausführungsform weist diese zusätzliche Schicht (D) eine sehr harte Oberfläche auf. Befindet sich die Barriereschicht (B) auf der Innenseite einer Backofensichtscheibe, so ist sie üblicherweise
- bei 300°C für 100 Stunden temperaturbeständig,
- bei diversen Direktverschmutzungen (beispielsweise Käse, Ketchup, Quark, Schweinebauch, Pflaumenmus) bei hohen Temperaturen (bis 300°C) leicht zu reinigen,
- zeigt im Radiertest, Schrubb-Test mit gängigen Reinigungstüchern oder Schwämmen, wie z.B. mit einem Mikrofasertuch, eine gute mechanische Beständigkeit und ist
- gegen diverse Reinigungsmittel, wie beispielsweise Backofenspray, Spülmittel, Essigreiniger und Lebensmittel chemisch beständig.

Die vorliegende Erfindung betrifft auch eine Vorrichtung, bei der zwischen dem Substrat und der ITO-Schicht (A) eine Trennschicht (C) angeordnet ist, die aus wenigstens einem Metalloxid- und/oder Metallnitrid besteht, die vorzugsweise ebenfalls aus Siliziumdioxid (SiO₂), Siliziumnitrid (Si₃N₄) und Aluminiumoxid (Al₂O₃) ausgewählt sind. Weitere geeignete Materialien sind TiO₂, SiOₓN_{y}, ZrO₂, MoO₂, Nb₂O₅.

Durch eine Trennschicht (C) wird die Lage der Plasmakante, wie vorstehend beschrieben, nicht verändert. Die Trennschicht (C) verringert die Diffusion von Alkali-Ionen aus dem Substrat in die wärmereflektierende Schicht (A) und verhindert eine Verschlechterung der Leitfähigkeit. Darüber hinaus verhindert die Trennschicht (C) die Diffusion von Indium an die Grenzfläche von Substrat und Reflektionsschicht (A).

Vorzugsweise weist die Trennschicht (C) eine Dicke im Bereich von 50 nm bis 200 nm, besonders bevorzugt im Bereich von 80 nm bis 120 nm, ganz besonders bevorzugt von 100 nm auf.

Vorzugsweise besteht die Trennschicht (C) aus Siliziumdioxid.

In einer zweckmäßigen Ausgestaltung umfasst die erfindungsgemäße Vorrichtung eine Trennschicht (C) mit einer Dicke von 80 bis 120 nm, vorzugsweise von 100 ± 10 nm, insbesonders ± 5 nm, eine ITO-Schicht (A) mit einer Dicke von 580 nm bis 630 nm, vorzugsweise von 600 ± 10 nm, und eine Barriereschicht (B) mit einer Dicke von 340 bis 360 nm, vorzugsweise 355 ± 5 bzw. ± 2 nm.

Dieses Schichtsystem wirkt ebenfalls als ein Interferenzsystem, das eine weitere Erhöhung der Temperatur im Innenraum eines Kaminofens oder Backofens erlaubt und gleichzeitig zu einer Verringerung der Temperaturen vor dem Kaminofen führt.

Vorzugsweise weist die erfindungsgemäße Vorrichtung mit einem Schichtsystem aus Trennschicht (C)/ ITO-Schicht (A)/ Barriereschicht (B) einen Transmissionsgrad im sichtbaren Licht >85 %, besonders bevorzugt >90 % auf.

Das erfindungsgemäße Schichtsystem aus Barriereschicht (B)/ ITO-Schicht (A) und Trennschicht (C) kann sich sowohl auf der Außen- wie auch auf der Innenseite einer Kaminsichtscheibe oder einer Backofensichtscheibe befinden. Sofern sich das Schichtsystem außen befindet, ergibt sich von außen nach innen eine Schichtfolge Barriereschicht (B)/ ITO-Schicht (A)/ Trennschicht (C)/ Substrat. Dieses Schichtsystem ermöglicht eine geringere Verrußung auf der Innenseite der Sichtscheiben des Kaminofens.

Sofern sich das Schichtsystem auf der Innenseite eines Kaminofens befindet, ergibt sich von außen nach innen eine Schichtfolge Substrat/ Trennschicht (C)/ ITO-Schicht (A)/ Barriereschicht (B). Dieses Schichtsystem ermöglicht es, eventuell auftretende Verrußungen auf der Kaminsichtscheibe leichter zu entfernen.

Eine weitere erfindungsgemäße transparente Vorrichtung weist eine Schichtfolge Barriereschicht (B)/ ITO-Schicht (A)/ Trennschicht (C)/ Substrat/ Trennschicht (C)/ ITO-Schicht (A)/ Barriereschicht (B) auf. Durch diese beidseitige Beschichtung des Substrates werden Temperaturen auf der Außenseite des Substrats erreicht, die die Sicherheit beim Berühren der Sichtscheibe deutlich erhöhen.

Vorzugsweise wird die ITO-Schicht (A) mittels eines Sputter-Verfahrens (Kathodenzerstäubung) aufgebracht.

Bevorzugt ist ein Sputter-Verfahren, ausgewählt aus der Gruppe bestehend DC-Magnetron-Sputtern, RF-Sputtern, HF-Sputtern, DC-Dioden-Sputtern, DC-Trioden-Sputtern und reaktivem MF-Sputtern, wobei DC-Magnetron-Sputter sowie reaktive MF-Sputter besonders bevorzugt sind.

Das Sputtern ist ein physikalischer Vorgang, bei dem Atome aus einem Festkörper (Target) durch Beschuss mit energiereichen Ionen (vorwiegend Edelgasionen) herausgelöst werden und in die Gasphase übergehen. Beim Sputtern wird Material von dem bombardierten Target mit einer bestimmten Target-Leistungsdichte abgetragen.

Gemäß der vorliegenden Erfindung wird zum Aufbringen der wärmereflektierenden Indium-Zinn-Oxid enthaltenden Schicht (A) eine Target-Leistungsdichte im Bereich von vorzugsweise 4 bis 8 W/cm², besonders bevorzugt von 4 bis 6 bzw. bis 5 W/cm² verwendet.

Als das Target für die Zerstäubung kann ein Sinterkörper von einem Komposit Metalloxid bestehend in der Hauptsache aus einem Oxid von Indium (In) und einem Oxid von Zinn (Sn) verwendet werden. Das für das Verfahren zur Verwendung kommende Target weist üblicherweise eine Sinterdichte von mindestens 80%, vorzugsweise von mindestens 90%, wobei mindestens 95% besonders bevorzugt sind. Ferner kann das Target anstelle eines Teils des Oxids von Zinn eine kleine Menge, beispielsweise einen Anteil von 10% oder der Gesamtmenge von mindestens einem Metall, ausgewählt aus Titan [Ti], Kupfer [Cu], Zink [Zn], Germanium [Ge], Antimon [Sb], Gallium [Ga], Cer [Ce], Wolfram [W], Rhenium [Re], Blei [Pb] und anderen Metallen als Oxid enthalten.

Auf die ITO-Schicht (A) kann eine Barriereschicht (B) mittels eines Verfahrens ausgewählt aus der Gruppe bestehend aus Sputtern, Vakuumverdampfungsverfahren, wie CVD (Chemical Vapor Deposition), und PVD (Physical Vapor Deposition), Elektronenstrahlverdampfen, Ionenplatierungsverfahren und Flamm-Pyrolyse, Tauchbeschichtung oder Spray-Pyrolyse aufgebracht werden. Die gleichen Verfahren eignen sich zum Aufbringen der Trennschicht (C) auf das transparente Substrat. Verfahren zum Aufbringen von Siliziumnitrid werden beispielsweise in DE 698 13 648 und DE 695 03 896 offenbart.

Eine Schicht aus Siliziumdioxid lässt sich auch mittels eines Sol-Gel-Verfahrens wie in DE 103 36 041 beschrieben aufbringen.

Ebenfalls lässt sich eine Trennschicht (C) flammpyrolytisch wie in DE 10 2004 053 706 beschrieben, auf das Substrat aufbringen.

Vorzugsweise wird eine Barriereschicht (B) auf eine ITO-Schicht (A) mittels eines Sputterverfahrens aufgebracht. Dabei wird zum Aufbringen insbesonders eine Target-Leistungsdichte im Bereich von 10 bis 20 W/cm², vorzugsweise von 12 bis 17 W/cm², insbesonders von 15 ± 1 W/cm² verwendet.

Bevorzugt wird die Trennschicht (C) auf das Substrat mittels eines Sputter-Verfahrens aufgebracht. Vorzugsweise wird zum Aufbringen eine Target-Leistungsdichte im Bereich von 10 bis 20 W/cm², besonders bevorzugt im Bereich von 12 bis 17 W/cm², ganz besonders bevorzugt von 15 ± 1 W/cm² verwendet.

In einer weiteren Ausführungsform der vorliegenden Erfindung wird ein Gegenstand aus einem Substrat mit einer ITO-Schicht (A) und einer Barriereschicht (B) nach dem Aufbringen der Barriereschicht (B) getempert.

Tempern bedeutet in diesem Zusammenhang eine Wärmebehandlung bei einer Temperatur zwischen 300 und 700°C, vorzugsweise zwischen 350° und 500°C. Die Temperdauer beträgt 1 bis zu 100 Stunden, vorzugsweise mindestens 2, insbesonders mindestens 3 Stunden.

Der Temperprozess erlaubt es, Fehlstellen in der ITO-Schicht zu beseitigen. Auf diese Weise kann die Leitfähigkeit der ITO-Schicht verbessert werden. Der Temperprozess wird vorzugsweise in Anwesenheit der Barriereschicht (B) durchgeführt.

Die Erfindung betrifft auch die Verwendung der vorstehend beschriebenen Vorrichtung zum thermischen Abschirmen von heißen Gegenständen. Eine derartige Verwendung betrifft beispielsweise die Beobachtung von heißen Prozessen im Industrieanlagenbau wie beispielsweise der Schmelze von Glas, von Metallen, in Ofenprozessen oder auch Brennern von Heizsystemen etc. Vorzugsweise wird die Vorrichtung in Kaminöfen insbesonders als transparente Sichtscheibe verwendet, durch welche das Feuer im Ofen beobachtet werden kann. Prinzipiell ist es jedoch auch möglich, die erfindungsgemäße Vorrichtung zur Auskleidung eines Brennraumes im Kaminofen zu verwenden.

Mit der erfindungsgemäßen Vorrichtung kann die Verbrennungstemperatur im Kaminofen erhöht werden. Diese Erhöhung sorgt für einen Anstieg der Temperatur im Innenraum innerhalb kurzer Zeit, so dass bereits bei der Anfeuerung weniger Stickoxide und Ruß/Feinstaub produziert wird. Der Ruß wird zusätzlich verbrannt, so dass mehr Wärme produziert wird.

Die vorstehend genannten transparenten Gegenstände gemäß der vorliegenden Erfindung eignen sich ebenfalls zur Verwendung in Backöfen. Vorzugsweise werden die vorstehend genannten transparenten Gegenstände als Sichtscheibe in Backöfen oder zur Auskleidung des Backofeninnenraums verwendet.

### Messmethoden

### Herstellungsbeispiel 1:

Es wurde ein mit einer Schichtdicke und Folge von 100 nm SiO₂ 600 nm ITO sowie 355 nm beschichtetes IRreflektierendes System bei hohen Sputterleistungen hergestellt. Dabei wurden die SiO₂-Schichten mit jeweils 15 W/cm² zur Erzielung einer guten Barrierewirkung (AAS: ≤ 1 µg/cm²) gesputtert. Die ITO-Schicht wurde mit 4,3 W/cm² zur Erzielung einer möglichst thermisch beständigen TCO-Beschichtung hergestellt. Dabei wird ITO bei der Herstellung typischerweise nicht höher als mit 3 W/cm² belastet. Mit dem so erhaltenen Schichtsystem wurden die folgenden Messungen durchgeführt.

### Beispiele

### a) Temperatur vor Kaminsichtscheibe

Das genannte Schichtsystem wird anschließend in einem holzbefeuerten Kaminofen als Kaminsichtscheibe eingesetzt. Gemäß EN 13240 werden während einem definierten Abbrand von Eichenholz oder Buchenholz durch definierte Holzkonstrukte mit gleicher Massenverteilung kurz vor der Kaminsichtscheibe Temperaturen mittels Thermoelementen an 5 verschiedenen, über die gesamte Scheibenfläche gleichmäßig verteilten Positionen (links, rechts, oben, unten, Mitte) Positionen aufgenommen, um die Wärmeabstrahlung zu untersuchen. Alternativ kommt ein Kalorimeter zur Erwärmung von Wasser zum Einsatz, mit welchem die komplette Wärmeabgabe aus dem Bereich der Kaminsichtscheibe erfasst wird. Die Ausrichtung des Schichtsystems ist auf der dem Ofen abgewandten Seite. Während einem Abbrand mit unbeschichteter Kaminsichtscheibe werden Temperaturen 3 cm vor der Scheibe von bis zu 180°C erreicht. Die Scheibe selbst wird darüber hinaus noch heißer (ca. 300 bis 400°C).

Bei einer handelsüblichen F: Zinnoxid beschichteten Glaskeramik reduziert sich die Temperatur im Abstand von 3 cm auf maximal ca. 90 bis 100°C.

Durch das Verwenden des vorstehend genannten Schichtsystems auf einer Seite können die Temperaturen auf maximal 70°C im Abstand von 3 cm vor der Scheibe reduziert werden.

Mit einer beidseitigen Beschichtung des erfindungsgemäßen Schichtsystems auf der Glasscheibe können die Temperaturen auf ca. maximal 40 bis 50°C im Abstand von 3 cm vor der Sichtscheibe reduziert werden.

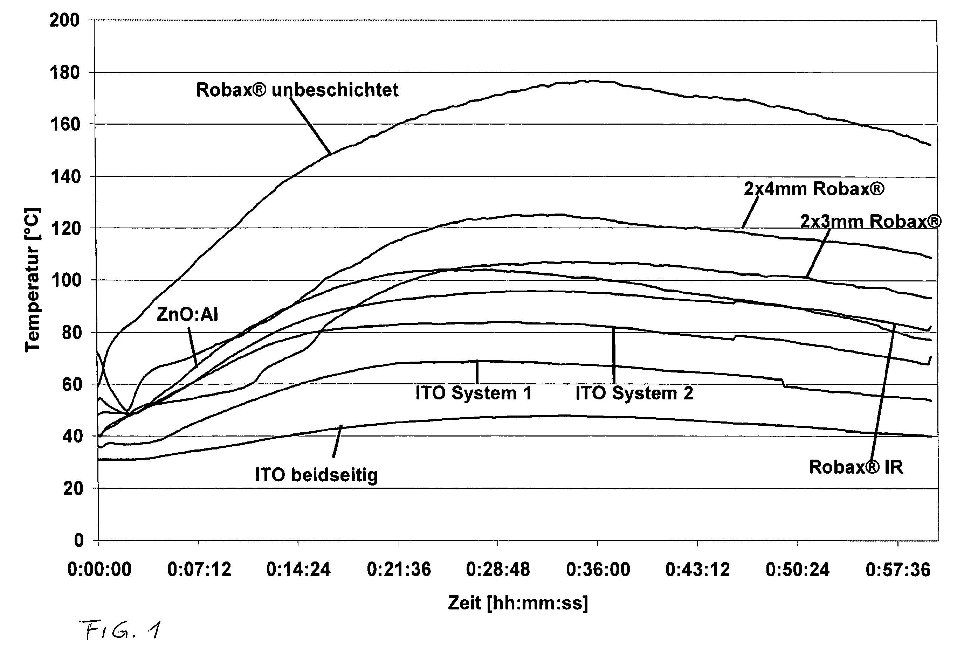

Die Temperaturverlaufe sind in der beiliegenden Fig. 1 dargestellt.

### b) Temperaturverlauf im Rauchrohr eines Kaminofens

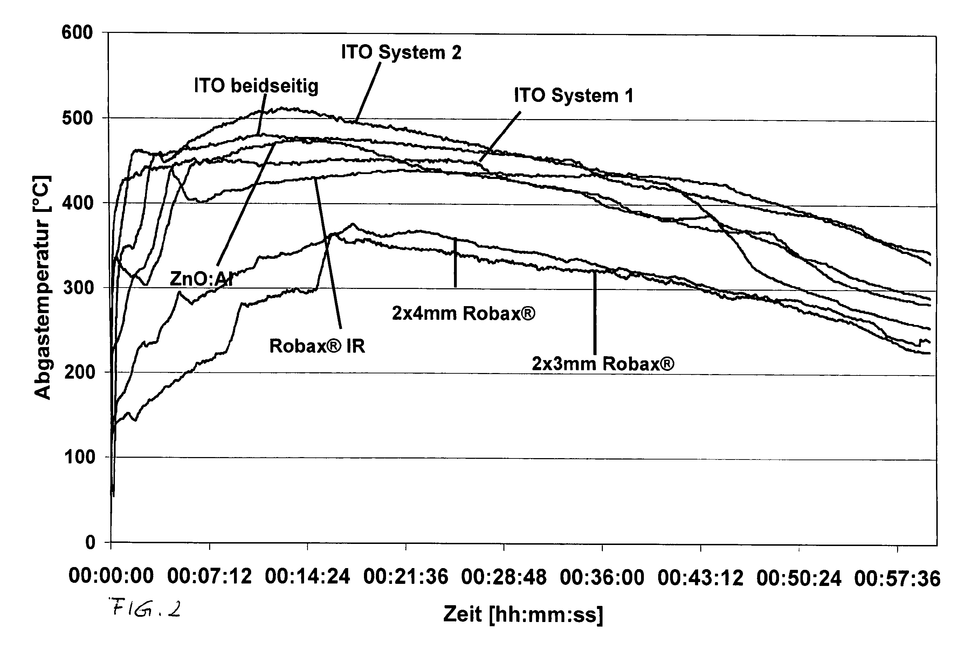

Durch die Verwendung des erfindungsgemäßen hoch IRreflektierenden Systems gelingt es auch, die Rußneigung an der Ofenscheibe zu verringern. Durch die Ausrichtung der TCO-Schicht verringert sich die Verrußung der Scheibe. Die Scheibe wird zwar heißer, jedoch verbrennt dadurch auch der Ruß auf der Innenseite. Durch die erhöhte Temperatur vor der Scheibe im Ofenraum werden aber weniger und sofern überhaupt reine Rußpartikel abgelagert, da Harzverbindungen vorher verbrennen. Die Scheibe lässt sich daher auch mit einem trockenen Tuch leicht reinigen. Im Gegensatz dazu müssen unbeschichtete Scheiben aufwendig durch abrasive Tücher und mittels Reinigungsmitteln gesäubert werden. Die erhöhte Temperatur im Ofenraum ist auch durch eine rasch ansteigende Temperatur im Rauchrohr nachzuweisen. Wie der beiliegenden Fig. 2 zu entnehmen ist, bewirken die erfindungsgemäßen Beschichtungen einen raschen Anstieg gleich zu Beginn der Befeuerung, wohingegen die Beschichtungen des Standes der Technik die Temperaturen erst, sofern überhaupt, verzögert erreichen.

## Patentansprüche

1. Wärmestrahlung reflektierende Vorrichtung mit hoher thermischer Dauerbeständigkeit bis 500°C, umfassend ein Substrat, das auf wenigstens einer Seite eine Wärmestrahlung reflektierende Schicht (A) aufweist, **dadurch gekennzeichnet, dass** die Schicht Indium-Zinn-Oxid enthält und dass sie von einer Barriereschicht (B) überdeckt wird, die wenigstens ein Metalloxid und/oder wenigstens ein Metallnitrid enthält.

2. Vorrichtung nach Anspruch 1 **dadurch gekennzeichnet, dass** die Dicke der Schicht (A) von 100 bis 800 nm beträgt.

3. Vorrichtung nach Anspruch 1 oder 2 **dadurch gekennzeichnet, dass** die Schicht (A) eine Ladungsdichte von 1,0 x 10²¹ cm⁻³ bis 1,7 x 10²¹ cm⁻³ aufweist.

4. Anspruch nach einem der vorhergehenden Ansprüche **dadurch gekennzeichnet, dass** das Substrat und die Vorrichtung transparent sind.

5. Vorrichtung nach einem der vorhergehenden Ansprüche **dadurch gekennzeichnet, dass** die wärmereflektierende Schicht (A) im sichtbaren Bereich eine Transmission von mindestens 70 % aufweist.

6. Vorrichtung nach einem der vorhergehenden Ansprüche **dadurch gekennzeichnet, dass** bei einer Temperatur von 20°C in der wärmereflektierenden Schicht (A) die Elektronen eine Beweglichkeit zwischen 25 und 50 cm²/Vs aufweisen.

7. Vorrichtung nach einem der vorhergehenden Ansprüche **dadurch gekennzeichnet, dass** das transparente Substrat Glas und/oder Glaskeramik ist.

8. Vorrichtung nach einem der vorhergehenden Ansprüche, **dadurch gekennzeichnet, dass** die Barriereschicht (B) aus Siliziumdioxid (SiO₂), Siliziumnitrid (Si₃N₄) Aluminiumoxid (Al₂O₃) und/oder TiO₂, SiOₓN_{y}, ZrO₂, MoO₂, Nb₂O₅ (bitte x und y definieren) besteht.

9. Vorrichtung nach einem der vorhergehenden Ansprüche, **dadurch gekennzeichnet, dass** die Barriereschicht (B) eine Dicke im Bereich von 50 nm bis 400 nm aufweist.

10. Vorrichtung nach einem der vorhergehenden Ansprüche **dadurch gekennzeichnet, dass** sie zwischen dem Substrat und der wärmereflektierenden Schicht (A) eine Trennschicht (C) aufweist, die aus Siliziumdioxid (SiO₂), Siliziumnitrid (Si₃N₄) und/oder Aluminiumoxid (Al₂O₃) besteht.

11. Vorrichtung nach Anspruch 10 **dadurch gekennzeichnet, dass** die Trennschicht (C) eine Dicke im Bereich von 10 nm bis 200 nm, bevorzugt im Bereich von 80 bis 120 nm, besonders bevorzugt von 100 nm aufweist.

12. Verfahren zur Herstellung einer wärmereflektierenden Vorrichtung nach einem der vorhergehenden Ansprüche, **dadurch gekennzeichnet, dass** die wärmereflektierende, Indium-Zinn-Oxid enthaltende Schicht mittels eines Sputter-Verfahrens und darüber hinaus eine Barriereschicht aufgebracht wird, die wenigstens ein Metalloxid und/oder wenigstens ein Metallnitrid enthält.

13. Verfahren nach Anspruch 12 **dadurch gekennzeichnet, dass** zum Aufbringen der Schicht mit einer Target-Leistungsdichte von mindestens 4 bis 5 W/cm².

14. Verfahren nach einem der Ansprüche 12 bis 13, **dadurch gekennzeichnet, dass** die Barriereschicht und/oder die Trennschicht (C) mittels eines Verfahrens ausgewählt aus der Gruppe bestehend aus Sputtern, Sol-Gel-Verfahren, Vakuumverdampfungsverfahren, wie CVD (Chemical Vapor Deposition), und PVD (Physical Vapor Deposition), Elektronenstrahlverdampfen, Ionenplatierungsverfahren und Pyrolyseverfahren aufgebracht wird.

15. Verwendung einer Vorrichtung nach einem oder mehreren der vorhergehenden Ansprüche in einem Kaminofen oder Backofen.
